(19) Europäisches Patentamt
European Patent Office
Office européen des brevets

(11) EP 4 187 666 A1

(12) **EUROPEAN PATENT APPLICATION**
published in accordance with Art. 153(4) EPC

(43) Date of publication:
**31.05.2023 Bulletin 2023/22**

(21) Application number: **20951514.7**

(22) Date of filing: **28.08.2020**

(51) International Patent Classification (IPC):
***H01M 10/052*** *(2010.01)* ***H01M 10/0565*** *(2010.01)*
***H01M 50/409*** *(2021.01)*

(52) Cooperative Patent Classification (CPC):
**H01M 10/052; H01M 10/0565; H01M 10/0569; H01M 50/409; H01M 50/414; H01M 50/443; H01M 50/446; H01M 50/46;** Y02E 60/10; Y02P 70/50

(86) International application number:
**PCT/JP2020/032620**

(87) International publication number:
**WO 2022/044263 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **LG Energy Solution, Ltd.**
**Seoul 07335 (KR)**

(72) Inventors:
- **KURODA Naoto**
  **Tokyo 100-6606 (JP)**
- **MIKUNI Hiroki**
  **Tokyo 100-6606 (JP)**
- **HORIKAWA Masayo**
  **Tokyo 100-6606 (JP)**
- **ORITA Akihiro**
  **Tokyo 100-6606 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **LITHIUM ION SECONDARY BATTERY, SEPARATION MEMBRANE, AND METHOD FOR MANUFACTURING THESE**

(57) According to one aspect of the present invention, there is provided a lithium ion secondary battery comprising a positive electrode mixture layer, a separation membrane, and a negative electrode mixture layer in the stated order, wherein: the positive electrode mixture layer contains a positive electrode active material, a first lithium salt, and a first solvent; the negative electrode mixture layer contains a negative electrode active material, a second lithium salt, and a second solvent different from the first solvent; the separation membrane contains a polymer having lithium ion conductivity, a third lithium salt, and a third solvent; and the content of the third solvent is 40% by mass or less based on the total amount of the separation membrane.

EP 4 187 666 A1

## Description

### [TECHNICAL FIELD]

The present invention relates to a lithium ion secondary battery, a separation membrane, and a method for manufacturing thereof.

### [BACKGROUND]

In recent years, with the spread of portable electronic devices and electric vehicles, secondary batteries typified by lithium ion secondary batteries are required to further improve the performance. For example, technology for improving the performance of lithium ion secondary batteries by containing different types of electrolytes in the positive electrode and the negative electrode is under study (for example, Patent Literature 1).

[Prior Art Literature]

[Patent Literature]

Patent Literature 1: Japanese Unexamined Patent Publication No. 2001-110447

### [DETAILED DESCRIPTION OF THE INVENTION]

### [Technical Problem]

In a lithium ion secondary battery in which different types of electrolytes are contained in the positive electrode and the negative electrode, it is important that the solvent contained in the electrolyte is sufficiently separated without mixing between the positive electrode and the negative electrode. The present inventors considered disposing a separation membrane between the positive electrode and the negative electrode in order to separate the solvent in the electrolyte in such lithium ion secondary batteries. This separation membrane is required to have the property that lithium ions pass through the separation membrane, but the solvent hardly pass through the separation membrane.

It is an object of the present invention to provide a separation membrane excellent in separation capability of these solvents which are used in lithium ion secondary batteries containing different types of solvents in the positive electrode mixture layer and the negative electrode mixture layer, and a lithium ion secondary battery comprising the separation membrane, and a method for manufacturing thereof.

### [Technical Solution]

According to one aspect of the present disclosure, there is provided a lithium ion secondary battery comprising a positive electrode mixture layer, a separation membrane, and a negative electrode mixture layer in the stated order, wherein: the positive electrode mixture layer contains a positive electrode active material, a first lithium salt, and a first solvent; the negative electrode mixture layer contains a negative electrode active material, a second lithium salt, and a second solvent different from the first solvent; the separation membrane contains a polymer having lithium ion conductivity, a third lithium salt, and a third solvent; and the content of the third solvent is 40% by mass or less based on the total amount of the separation membrane.

According to another aspect of the present disclosure, there is provided a separation membrane for being disposed between a positive electrode mixture layer and a negative electrode mixture layer, in a lithium ion secondary battery comprising a positive electrode mixture layer that contains a positive electrode active material, a first lithium salt, and a first solvent, and a negative electrode mixture layer that contains a negative electrode active material, a second lithium salt, and a second solvent different from the first solvent, wherein the separation membrane contains a polymer having lithium ion conductivity, a third lithium salt, and a third solvent, and the content of the third solvent is 40% by mass or less based on the total amount of the separation membrane.

According to another aspect of the present disclosure, there is provided a method for manufacturing a lithium ion secondary battery, the method comprising the steps of: obtaining a positive electrode comprising a positive electrode mixture layer that contains a positive electrode active material, a first lithium salt, and a first solvent, obtaining a negative electrode comprising a negative electrode mixture layer that contains a negative electrode active material, a second lithium salt, and a second solvent different from the first solvent, forming a slurry containing a polymerizable compound capable of forming a polymer having lithium ion conductivity, a third lithium salt, and a third solvent in the form of a membrane and then polymerizing the polymerizable compound to obtain a separation membrane, and providing the

separation membrane between the positive electrode and the negative electrode, wherein the content of the third solvent is 40% by mass or less based on the total amount of the slurry.

According to yet another aspect of the present disclosure, there is provided a method for manufacturing a separation membrane for being disposed between a positive electrode mixture layer and a negative electrode mixture layer, in a lithium ion secondary battery comprising a positive electrode mixture layer that contains a positive electrode active material, a first lithium salt, and a first solvent, and a negative electrode mixture layer that contains a negative electrode active material, a second lithium salt, and a second solvent different from the first solvent, the method comprising: forming a slurry containing a polymerizable compound capable of forming a polymer having lithium ion conductivity, a third lithium salt, and a third solvent in the form of a membrane and then polymerizing the polymerizable compound to obtain a separation membrane, wherein the content of the third solvent is 40% by mass or less based on the total amount of the slurry.

In each aspect, the content of the third solvent may be 35% by mass or less based on the total amount of the separation membrane or based on the total amount of the slurry.

In each aspect, the third solvent may be an ionic liquid.

In each aspect, the separation membrane or the slurry may further contain inorganic oxide particles.

## [Advantageous Effects]

According to the present invention, a separation membrane excellent in separation capability of these solvents, which are used in lithium ion secondary batteries containing different types of solvents in the positive electrode mixture layer and the negative electrode mixture layer, and a lithium ion secondary battery comprising the separation membrane, and a method for manufacturing thereof can be provided.

## [BRIEF DESCRIPTION OF THE DRAWINGS]

Fig. 1 is a perspective view showing a lithium ion secondary battery according to one embodiment; and
Fig. 2 is an exploded perspective view showing one embodiment of an electrode group in the lithium ion secondary battery shown in Fig. 1.

## [DETAILED DESCRIPTION OF THE EMBODIMENTS]

Hereinafter, one embodiment of the present invention is described while appropriately referring to the accompanying drawings. However, the present invention is not limited to the following embodiments.

As used herein, (meth)acrylic acid means acrylic acid or the corresponding methacrylic acid thereof. The same applies to other similar expressions such as (meth)acrylate.

Fig. 1 is a perspective view showing a lithium ion secondary battery according to one embodiment. As shown in Fig. 1, a lithium ion secondary battery 1 according to one embodiment is a so-called laminated type secondary battery that comprises an electrode group 2 and a bag type battery outer packaging body 3 that houses the electrode group 2. The electrode group 2 is provided with a positive current collector tab 4 and a negative current collector tab 5. The positive electrode current collector tab 4 and the negative electrode current collector tab 5 protrude from the inside of the battery outer packaging body 3 to the outside, so that the positive electrode current collector and the negative electrode current collector (details will be described later) can be electrically connected to the outside of the lithium ion secondary battery 1. In another embodiment, the lithium ion secondary battery 1 may have a shape (coin type, cylindrical type, etc.) other than the laminate shape.

The battery outer packaging body 3 may be a container formed of, for example, a laminated film. The laminated film may be, for example, a laminated film in which a polymer film such as a polyethylene terephthalate (PET) film, a metal foil such as aluminum, copper, or stainless steel, and a sealant layer such as polypropylene are laminated in the stated order.

Fig. 2 is an exploded perspective view showing one embodiment of an electrode group 2 in the lithium ion secondary battery 1 shown in Fig. 1. As shown in Fig. 2, the electrode group 2 according to the present embodiment comprises a positive electrode 6, a separation membrane 7, and a negative electrode 8 in the stated order. The positive electrode 6 comprises a positive electrode current collector 9 and a positive electrode mixture layer 10 provided on the positive electrode current collector 9. A positive current collector tab 4 is provided on the positive electrode current collector 9. The negative electrode 8 comprises a negative electrode current collector 11 and a negative electrode mixture layer 12 provided on the negative electrode current collector 11. A negative electrode current collector tab 5 is provided on the negative electrode current collector 11.

The positive electrode current collector 9 is made of, for example, aluminum, titanium, stainless steel, nickel, calcinated carbon, conductive polymer, conductive glass, or the like. The thickness of the positive electrode current collector 9 may be, for example, 1 $\mu$m or more and 50 $\mu$m or less.

The negative electrode current collector 11 is made of, for example, copper, stainless steel, nickel, aluminum, titanium, calcinated carbon, conductive polymer, conductive glass, aluminum-cadmium alloy, or the like. The thickness of the negative electrode current collector 11 may be, for example, 1 $\mu$m or more and 50 $\mu$m or less.

In one embodiment, the positive electrode mixture layer 10 contains a positive electrode active material, a lithium salt (first lithium salt), and a solvent (first solvent).

The positive electrode active material may be, for example, lithium oxide. Examples of the lithium oxide include $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$ and $Li_xMn_{2-y}M_yO_4$ (in each formula, M represents at least one element selected from the group consisting of Na, Mg, Sc, Y, Mn, Fe, Co, Cu, Zn, Al, Cr, Pb, Sb, V and B (provided that M is an element different from other elements in each formula), x=0~1.2, y=0~0.9, z=2.0~2.3). The lithium oxide represented by $Li_xNi_{1-y}M_yO_z$ may be $Li_xNi_{1-(y1+y2)}Co_{y1}Mn_{y2}O_z$ (wherein x and z are the same as those described above, y1 =0 ~ 0.9, y2=0~0.9, and y1+y2=0~0.9), and may be, for example, $LiNi_{1/3}Co_{1/3}Mn_{1/3}O_2$, $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$. The lithium oxide represented by $Li_xNi_{1-y}M_yO_z$ may be $Li_xNi_{1-(y3+y4)}Co_{y3}Al_{y4}O_z$(wherein, x and z are the same as those described above, y3=0~0.9, y4=0~0.9, and y3+y4=0~0.9), and may be, for example, $LiNi_{0.8}Co_{0.15}Al_{0.05}O_2$.

The positive electrode active material may be lithium phosphate. Examples of the lithium phosphate include lithium manganese phosphate ($LiMnPO_4$), lithium iron phosphate ($LiFePO_4$), lithium cobalt phosphate ($LiCoPO_4$), and lithium vanadium phosphate ($Li_3V_2(PO_4)_3$).

The content of the positive electrode active material may be 70% by mass or more, 80% by mass or more, or 85% by mass or more based on the total amount of the positive electrode mixture layer. The content of the positive electrode active material may be 95% by mass or less, 92% by mass or less, or 90% by mass or less based on the total amount of the positive electrode mixture layer.

The first lithium salt may be, for example, at least one selected from the group consisting of $LiPF_6$, $LiBF_4$, $LiClO_4$, $LiB(C_6H_5)_4$, LiCHsSOs, $CF_3SO_2OLi$, $LiN(SO_2F)_2$ (LiFSI, lithium bisfluorosulfonylimide), $LiN(SO_2CF_3)_2$ (LiTFSI, lithium bistrifluoromethanesulfonylimide), and $LiN(SO_2CF_2CF_3)_2$.

The content of the first lithium salt may be 0.5 mol/L or more, 0.7 mol/L or more, or 0.8 mol/L or more, and 1.5 mol/L or less, 1.3 mol/L or less, or 1.2 mol/L or less based on the total amount of the first solvent.

The first solvent is a solvent for dissolving the first lithium salt. Examples of the first solvent include a cyclic carbonate such as ethylene carbonate, propylene carbonate, vinylene carbonate, vinyl ethylene carbonate, fluoroethylene carbonate, and difluoroethylene carbonate, a chain carbonate such as dimethyl carbonate, diethyl carbonate, and ethyl methyl carbonate, a cyclic ester such as $\gamma$-butyrolactone, $\gamma$-valerolactone, $\delta$-valerolactone, $\varepsilon$-caprolactone, and $\gamma$-hexanolactone, an ether such as tetrahydrofuran, 1,3-dioxane, dimethoxyethane, diethoxyethane, methoxyethoxyethane, glyme, diglyme, triglyme and tetraglyme, a phosphoric acid ester such as phosphoric acid triester, a nitrile such as acetonitrile, benzonitrile, adiponitrile, and glutaronitrile, a chain sulfone such as dimethyl sulfone and diethyl sulfone, a cyclic sulfone such as sulfolane, a cyclic sulfonic acid ester such as propanesultone, and the like. The first solvent can be used singly or in combination of two or more types.

The solvent preferably used as the first solvent is a solvent having excellent oxidation resistance, such as acetonitrile and ethylene carbonate. Thereby, it is possible to increase the oxidation resistance of the positive electrode mixture layer 10.

The content of the first solvent contained in the positive electrode mixture layer 10 can be appropriately set within a range in which the first lithium salt can be dissolved, but for example, it may be 10% by mass or more and 80% by mass or less based on the total amount of the positive electrode mixture layer.

The positive electrode mixture layer 10 may further contain a binder and a conductive material as other components.

The binder may be a polymer containing, as a monomer unit, at least one selected from the group consisting of tetrafluoroethylene, vinylidene fluoride, hexafluoropropylene, acrylic acid, maleic acid, ethyl methacrylate, methyl methacrylate, and acrylonitrile, rubber such as styrene-butadiene rubber, isoprene rubber, acrylic rubber, and like. The binder is preferably polyvinylidene fluoride or a copolymer containing hexafluoropropylene and vinylidene fluoride as a monomer unit.

The content of the binder may be 0.3% by mass or more, 0.5% by mass or more, 1% by mass or more, or 1.5% by mass or more, and 10% by mass or less, 8% by mass or less, 6% by mass or less, or 4% by mass or less based on the total amount of the positive electrode mixture layer.

The conductive material may be a carbon material such as carbon black, acetylene black, graphite, carbon fiber, or carbon nanotube, and the like. These conductive materials are used singly or in combination of two or more types.

The content of the conductive material may be 0.1% by mass or more, 1% by mass or more, or 3% by mass or more based on the total amount of the positive electrode mixture layer. The content of the conductive material is

preferably 15% by mass or less, more preferably 10% by mass or less, and still more preferably 8% by mass or less based on the total amount of the positive electrode mixture layer, from the viewpoint of suppressing the increase in the volume of the positive electrode 6 and the decrease in the energy density of the lithium ion secondary battery 1 associated therewith.

The thickness of the positive electrode mixture layer 10 may be 5 $\mu$m or more, 10 $\mu$m or more, 15 $\mu$m or more, or 20 $\mu$m or more, and 100 $\mu$m or less, 80 $\mu$m or less, 70 $\mu$m or less, or 50 $\mu$m or less.

In one embodiment, the negative electrode mixture layer 12 contains a negative electrode active material, a lithium salt (second lithium salt), and a solvent (second solvent).

As the negative electrode active material, those commonly used in the field of energy devices can be used. Specific examples of negative electrode active materials include metal lithium, lithium titanate ($Li_4Ti_5O_{12}$), lithium alloy or other metal compounds, carbon materials, metal complexes, organic polymer compounds, and the like. These negative electrode active materials are used singly or in combination of two or more types. Examples of the carbon material may include graphite such as natural graphite (flaky graphite, etc.), and artificial graphite, amorphous carbon, carbon fiber, and carbon black such as acetylene black, ketjen black, channel black, furnace black, lamp black, thermal black, and the like. The negative electrode active material may be a negative electrode active material containing silicon as a constituent element, a negative electrode active material containing tin as a constituent element, or the like, from the viewpoint of obtaining a larger theoretical capacity (e.g., 500 to 1500 Ah/kg). Among them, the negative electrode active material may be a negative electrode active material containing silicon as a constituent element.

The negative electrode active material containing silicon as a constituent element may be an alloy containing silicon as a constituent element, and an example thereof may be an alloy containing silicon and at least one selected from the group consisting of nickel, copper, iron, cobalt, manganese, zinc, indium, silver, titanium, germanium, bismuth, antimony and chromium as a constituent element. The negative electrode active material containing silicon as a constituent element may be an oxide, a nitride, or a carbide, and a specific example thereof may be a silicon oxide such as SiO, $SiO_2$, and LiSiO, a silicon nitride such as $Si_3N_4$ and $Si_2N_2O$, a silicon carbide such as SiC, or the like.

The content of the negative electrode active material may be 60% by mass or more, 65% by mass or more, or 70% by mass or more based on the total amount of the negative electrode mixture layer. The content of the negative electrode active material may be 99% by mass or less, 95% by mass or less, or 90% by mass or less based on the total amount of the negative electrode mixture layer.

The type and content of the second lithium salt may be identical to those of the first lithium salt contained in the above-mentioned positive electrode mixture layer 10. The second lithium salt may be the same as or different from the first lithium salt.

The second solvent is a solvent for dissolving the second lithium salt. As the second solvent, the solvent identical to that used as the first solvent can be used, but a solvent different from the first solvent may be used. Thereby, since suitable solvents can be used for the positive electrode 6 and the negative electrode 8, respectively, it is possible to improve various performances of the lithium ion secondary battery 1, such as energy density and life improvement.

The solvent preferably used as the second solvent is a solvent having excellent oxidation resistant property, such as $\gamma$-butyrolactone and tetrahydrofuran. Thereby, it is possible to suppress reductive decomposition of the second solvent contained in the negative electrode mixture layer 12.

The content of the second solvent contained in the negative electrode mixture layer 12 can be appropriately set within a range in which the second lithium salt can be dissolved, but it may be, for example, 10% by mass or more and 80% by mass or less based on the total amount of the negative electrode mixture layer.

The negative electrode mixture layer 12 may further contain a binder and a conductive material as other components. The types and contents of the binder and the conductive material can be used if they are identical to the types and contents of the binder and the conductive material in the above-mentioned positive electrode mixture layer 10.

The thickness of the negative electrode mixture layer 12 may be 10 $\mu$m or more, 15 $\mu$m or more, or 20 $\mu$m or more, and 100 $\mu$m or less, 80 $\mu$m or less, 70 $\mu$m or less, 50 $\mu$m or less, 40 $\mu$m or less, or 30 $\mu$m or less.

The separation membrane 7 is a separator for being disposed between the positive electrode mixture layer 10 and the negative electrode mixture layer 12 in the lithium ion secondary battery 1. This separation membrane has a role of separating the first solvent and the second solvent contained in the positive electrode mixture layer 10 and the negative electrode mixture layer 12 from each other and preventing them from being mixed with each other. The separation membrane 7 allows exchange of lithium ions.

The separation membrane 7 contains a polymer having lithium ion conductivity, a lithium salt (third lithium salt), and a solvent (third solvent).

The polymer having lithium ion conductivity means a polymer having the property of being able to conduct lithium ions derived from the lithium salt in the presence of the lithium salt. Whether or not a polymer can conduct lithium ions can be confirmed by measuring the ionic conductivity of the polymer. If the peak of ion conductivity measured when 1 to 40% by mass of lithium salt is added to the polymer is $1 \times 10^{-6}$ S/cm or more, the polymer can be said to have lithium ion conductivity.

The polymer having lithium ion conductivity may be a polymer having at least one group selected from the group consisting of a carbonyl group and an ether group. The ether group includes a chain ether group and a cyclic ether group.

Examples of such a polymer having lithium ion conductivity include polyalkyl (meth)acrylates such as polymethyl(meth)acrylate; poly(polyalkylene glycol di(meth)acrylate) such as polyethylene glycol di(meth)acrylate); poly(meth)acrylic acid; polyacrylamide; polymethacrylamide; poly(N-isopropylacrylamide); polymethyl vinyl ketone; polyvinyl acetate; polyalkylene glycols such as polyethylene glycol, polypropylene glycol, and polytetramethylene ether glycol.

The polymer having lithium ion conductivity may be a polymer having a cyclic ether group such as an epoxy group, an oxetane group, a tetrahydrofuran group, or a tetrahydropyran group on the side chain of poly(meth)acrylic acid. That is, the polymer having lithium ion conductivity may be a polymer represented by the following formula (1):

[Chemical Formula 1]

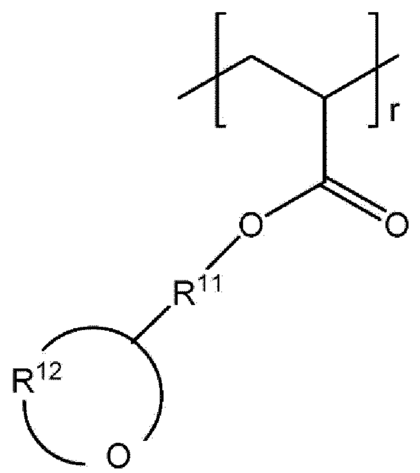

(1)

wherein, in formula (1), $R^{11}$ represents a linear or branched alkylene group or a single bond, $R^{12}$ represents a linear or branched alkylene group, and r represents an integer of 2 or more.

In formula (1), the number of carbon atoms in the alkylene group represented by $R^{11}$ may be, for example, 2 or more and 5 or less. The number of carbon atoms in the alkylene group represented by $R^{12}$ may be, for example, 2 or more and 5 or less. r may be, for example, 5 or more and 20 or less.

Examples of the polymer represented by the formula (1) include polyglycidyl(meth)acrylate, poly(3-ethyloxetan-3-yl)methyl(meth)acrylate, and the like.

The content of the polymer having lithium ion conductivity is preferably 60% by mass or more, more preferably 70% by mass or more, still more preferably 80% by mass or more based on the total amount of the separation membrane, from the viewpoint of film formability. The content of the polymer having lithium ion conductivity is preferably 90% by mass or less, more preferably 80% by mass or less, and still more preferably 70% by mass or less based on the total weight of the separation membrane, from the viewpoint of further increasing the ionic conductivity of the separation membrane 7.

The type of the third lithium salt may be identical to that of the first lithium salt contained in the above-mentioned positive electrode mixture layer 10. The tertiary lithium salt may be of the same as the first lithium salt and/or the second lithium salt, or may be different from the first lithium salt and/or the second lithium salt.

The content of the third lithium salt is preferably 5% by mass or more, more preferably 13% by mass or more, and still more preferably 17% by mass or more based on the total amount of the third lithium salt and the third solvent, from the viewpoint of the superiority of the ionic conductivity of the separation membrane. The content of the third lithium salt is preferably 35% by mass or less, more preferably 23% by mass or less, and still more preferably 20% by mass or less based on the total amount of the third lithium salt and the third solvent, from the viewpoint of the viscosity of the solvent.

The content of the third lithium salt is preferably 2% by mass or more, more preferably 3% by mass or more, and still more preferably 5% by mass or more based on the total weight of the separation membrane, from the viewpoint of further increasing the ion conductivity of the separation membrane 7 .

The content of the third lithium salt is preferably 12% by mass or less, more preferably 9% by mass or less, and still more preferably 6% by mass or less based on the total weight of the separation membrane, from the viewpoint of further increasing the ionic conductivity of the separation membrane 7.

The third solvent is a solvent for dissolving the third lithium salt. From the viewpoint of suppressing volatilization

from the separation membrane, the third solvent is preferably an ionic liquid or glyme represented by the following formula (2), more preferably an ionic liquid.

$$R^{21}O\text{-}(CH_2CH_2O)_k\text{-}R^{22} \qquad (2)$$

[wherein, in formula (2), $R^{21}$ and $R^{22}$ each independently represent an alkyl group having 1 to 4 carbon atoms, and k represents an integer of 3 to 6]

The ionic liquid contains the following anion component and cation component. And, the ionic liquid used herein is a liquid substance at -20°C or higher.

The anion component of the ionic liquid is not particularly limited, but includes a halogen anion such as $Cl^-$, Br or $I^-$, an inorganic anion such as $BF_4^-$ or $N(SO_2F)_2^-$([FSI]$^-$), an organic anion such as $B(C_6H_5)_4^-$, $CH_3SO_2O^-$, $CF_3SO_2O^-$, $N(SO_2C_4F_9)_2^-$, $N(SO_2CF_3)_2^-$([TFSI]$^-$), or $N(SO_2C_2F_5)_2^-$, and the like. The anion component of the ionic liquid preferably contains at least one anion component represented by the following formula 3.

$$N(SO_2C_mF_{2m+1})(SO_2C_nF_{2n+1})^- \qquad (3)$$

[wherein, in formula (3), m and n each independently represent an integer of 0 to 5. m and n may be the same as or different from each other, and are preferably the same as each other.]

The anion component represented by formula (3) is, for example, $N(SO_2C_4F_9)_2^-$, $N(SO_2F)_2^-$([FSI]$^-$), $N(SO_2CF_3)_2^-$([TFSI]$^-$) and $N(SO_2C_2F_5)_2^-$. From the viewpoint of improving the ion conductivity in the lithium ion secondary battery 1, the anion component of the ionic liquid more preferably contains at least one selected from the group consisting of $N(SO_2C_4F_9)_2^-$, $CF_3SO_2O^-$, [FSI]$^-$, [TFSI]$^-$ and $N(SO_2C_2F_5)_2^-$, and more preferably [FSI]$^-$.

The cationic component of the ionic liquid is not particularly limited, but is preferably at least one selected from the group consisting of chain quaternary onium cations, piperidinium cations, pyrrolidinium cations, pyridinium cations and imidazolium cations.

The chain quaternary onium cation is, for example, a compound represented by the following formula (4).

[Chemical Formula 2]

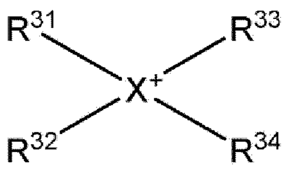

(4)

[wherein, in formula (4), $R^{31}$ to $R^{34}$ each independently represent a chain alkyl group having 1 to 20 carbon atoms or a chain alkoxy alkyl group represented by $R\text{-}O\text{-}(CH_2)_n\text{-}$ (where R represents a methyl group or an ethyl group, and n represents an integer of 1 to 4), and X represents a nitrogen atom or a phosphorus atom. The number of carbon atoms in the alkyl group represented by $R^{31}$ to $R^{34}$ is preferably 1 to 20, more preferably 1 to 10, still more preferably 1 to 5]

The piperidinium cation is a nitrogen-containing six-membered cyclic compound represented by, for example, the following formula (5).

[Chemical Formula 3]

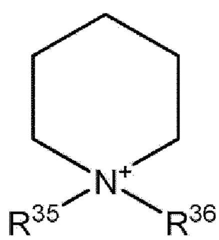

(5)

[wherein, in formula (5), $R^{35}$ and $R^{36}$ each independently represent an alkyl group having 1 to 20 carbon atoms or an alkoxyalkyl group represented by $R\text{-}O\text{-}(CH_2)_n\text{-}$ (where R represents a methyl group or an ethyl group, and n represents an integer of 1 to 4). The number of carbon atoms in the alkyl group represented by $R^{35}$ and $R^{36}$ is preferably 1 to 20, more preferably 1 to 10, still more preferably 1 to 5]

The pyrrolidinium cation is, for example, a 5-membered cyclic compound represented by the following formula (6).

[Chemical Formula 4]

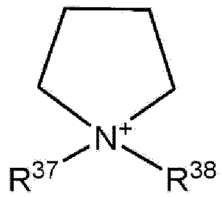

(6)

[wherein, in formula (6), $R^{37}$ and $R^{38}$ each independently represent an alkyl group having 1 to 20 carbon atoms or an alkoxyalkyl group represented by $R-O-(CH_2)_n-$ (where R represents a methyl group or an ethyl group, and n represents an integer of 1 to 4). The number of carbon atoms in the alkyl group represented by $R^{37}$ and $R^{38}$ is preferably 1 to 20, more preferably 1 to 10, still more preferably 1 to 5].

A pyridinium cation is, for example, a compound represented by the following formula (7).

[Chemical Formula 5]

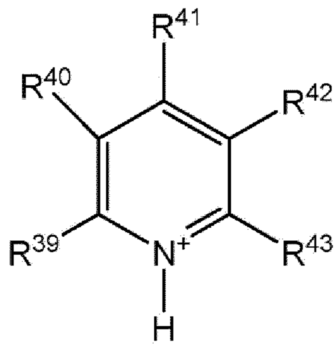

(7)

[wherein, in Formula (7), $R^{39}$ to $R^{43}$ are each independently an alkyl group having 1 to 20 carbon atoms or an alkoxyalkyl group represented by $R-O-(CH_2)_n-$(where R represents a methyl group or an ethyl group, and n represents an integer of 1 to 4), or a hydrogen atom. The number of carbon atoms in the alkyl group represented by $R^{39}$ to $R^{43}$ is preferably 1 to 20, more preferably 1 to 10, still more preferably 1 to 5]

The imidazolium cation is, for example, a compound represented by the following formula (8).

[Chemical Formula 6]

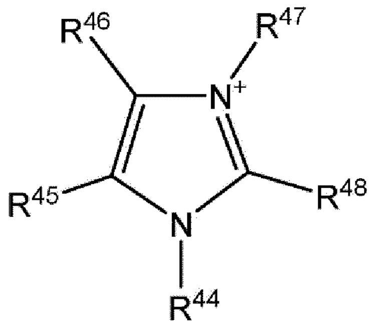

(8)

[wherein, in formula (8), $R^{44}$ to $R^{48}$ each independently represents an alkyl group having 1 to 20 carbon atoms or an alkoxyalkyl group represented by $R-O-(CH_2)_n-$ (where R represents a methyl group or an ethyl group, and n represents an integer of 1 to 4), or a hydrogen atom. The number of carbon atoms in the alkyl group represented by $R^{44}$ to $R^{48}$ is

preferably 1 to 20, more preferably 1 to 10, still more preferably 1 to 5].

The ionic liquid may be, more specifically, N,N-diethyl-N-methyl-N-(2-methoxyethyl)ammonium-bis(trifluoromethanesulfonyl)imide(DEME-TFSI), N,N-diethyl-N-methyl-N-(2-methoxyethyl)ammonium-bis(fluorosulfonyl)imide(DEME-FSI), 1-ethyl-3-methylimidazolium-bis(trifluoromethanesulfonyl)imide(EMI-TFSI), 1-ethyl-3-methylimidazolium-bis(fluorosulfonyl)imide(EMI-FSI), N-methyl-N-propylpyrrolidinium-bis(trifluoromethanesulfonyl)imide(Py13-TFSI), N-methyl-N-propylpyrrolidinium-bis(fluorosulfonyl)imide(Py13-FSI), N-ethyl-N-methylpyrrolidinium-bis(trifluoromethanesulfonyl)imide(Py12-TFSI), N-ethyl-N-methylpyrrolidinium-bis(fluorosulfonyl)imide(Py12-FSI), 1-ethyl-3-methylimidazolium dicyanamide(EMI-DCA), and the like.

In the glyme represented by the above-mentioned formula (2), $R^{21}$ and $R^{22}$ in formula (2) each independently represent an alkyl group having 4 or less carbon atoms or a fluoroalkyl group having 4 or less carbon atoms, and k represents an integer of 1 to 6. $R^{21}$ and $R^{22}$ are each independently preferably a methyl group or an ethyl group.

Glyme may be specifically monoglyme (k=1), diglyme (k=2), triglyme (k=3), tetraglyme (k=4), pentaglyme (k=5), hexaglyme (k=6).

When the separation membrane 7 contains glyme as a solvent, a part or all of the glyme may form a complex with a lithium salt (third lithium salt).

The content of the third solvent is 40% by mass or less based on the total amount of the separation membrane in order to obtain the separation membrane 7 having excellent separation capability of the solvents (first solvent and second solvent). From the same point of view, the content of the third solvent may be 38% by mass or less, 35% by mass or less, 33% by mass or less, 30% by mass or less, 25% by mass or less, 20% by mass or less, 18% by mass or less, 15% by mass or less, 13% by mass or less, or 10% by mass or less based on the total amount of the separation membrane. The content of the third solvent is 5% by mass or more, 8% by mass or more, 18% by mass or more, or 27% by mass or more based on the total amount of the separation membrane from the viewpoint of further increasing the ionic conductivity of the separation membrane 7.

The separation membrane 7 may further contain inorganic oxide particles. Thereby, the ionic conductivity of the separation membrane 7 can be made more excellent.

The inorganic oxide particles may be, for example, particles of $Li_2O$, $Al_2O_3$, $TiO_2$, $GeO_2$, $SiO_2$ or $P_2O_5$. The inorganic oxide particles may be particles whose main crystal phase is $Li_{1+x+y}Al_xTi_{2-x}Si_yP_{3-y}O_{12}$($0 \leq x \leq 1$, $0 \leq y \leq 1$, preferably $0 \leq x \leq 0.4$, $0 < y \leq 0.6$, more preferably $0.1 \leq x \leq 0.3$, $0.1 < y \leq 0.4$). The inorganic oxide particles can use these particles singly or in combination of two or more types.

The average particle size of the inorganic oxide particles may be 2 $\mu$m or more, 10 $\mu$m or more, or 50 $\mu$m or more, and 250 $\mu$m or less, 180 $\mu$m or less, or 100 $\mu$m or less. The average particle size of the inorganic oxide particles is measured by measuring the particle size distribution with a laser diffraction-type particle size distribution measuring device.

The content of the inorganic oxide particles is preferably 1% by mass or more, more preferably 5% by mass or more, still more preferably 10% by mass or more, based on the total amount of the separator, from the viewpoint of further increasing the ionic conductivity of the separation membrane 7. The content of the inorganic oxide particles is preferably 60% by mass or less, more preferably 50% by mass or less, still more preferably 40% by mass or less, from the viewpoint of further increasing the separation capability of the separation membrane 7.

The thickness of the separation membrane 7 is preferably 100 $\mu$m or more, 200 $\mu$m or more, or 500 $\mu$m or more from the viewpoint of further enhancing the separation capability of the separation membrane 7. The thickness of the separation membrane 7 is preferably 800 $\mu$m or less, 600 $\mu$m *or* less, or 400 $\mu$m or less from the viewpoint of increasing the energy density of the separation membrane 7.

Next, the manufacturing method of the lithium ion secondary battery 1 is described. A method for manufacturing a lithium ion secondary battery 1 according to one embodiment comprises a step of obtaining a positive electrode 6 comprising a positive electrode mixture layer 10 that contains a positive electrode active material, a first lithium salt, and a first solvent, a step of obtaining a negative electrode 8 comprising a negative electrode mixture layer 12 that contains a negative electrode active material, a second lithium salt, and a second solvent different from the first solvent, a step of forming a slurry containing a polymerizable compound capable of forming a polymer having lithium ion conductivity, a third lithium salt, and a third solvent in the form of a membrane and then polymerizing the polymerizable compound to obtain a separation membrane 7, and a step of providing the separation membrane 7 between the positive electrode 6 and the negative electrode 8. The order of each step is arbitrary.

In the manufacturing method, specific aspects of the positive electrode active material, the first lithium salt, the first solvent, the negative electrode active material, the second lithium salt, the second solvent, the third lithium salt, and the third solvent are as described above.

In the step of obtaining the positive electrode and the step of obtaining the negative electrode, the positive electrode 6 and the negative electrode 8 can be obtained using a known method. For example, the material used for the positive electrode mixture layer 10 or the negative electrode mixture layer 12 is dispersed in an appropriate amount of dispersion medium using a kneader, a disperser, or the like to obtain a slurry-like positive electrode mixture or negative

electrode mixture. Then, the positive electrode mixture or the negative electrode mixture is applied onto the positive electrode current collector 9 or the negative electrode current collector 11 by a doctor blade method, a dipping method, a spray method, or the like, and the dispersion medium is volatilized to obtain a positive electrode 6 and a negative electrode 8. At this time, the dispersion medium may be water, N-methyl-2-pyrrolidone (NMP), or the like.

In the step of obtaining the separation membrane, a slurry containing a polymerizable compound capable of forming a polymer having lithium ion conductivity, a third lithium salt, and a third solvent is prepared in one embodiment. Specific embodiments of the polymer having lithium ion conductivity are as described above, and the polymerizable compound capable of forming a polymer having lithium ion conductivity (hereinafter also simply referred to as a "polymerizable compound") is a compound for forming the polymer.

Examples of the polymerizable compound include alkyl(meth)acrylate such as methyl (meth)acrylate; polyalkylene glycol di(meth)acrylate such as polyethylene glycol di(meth)acrylate; (meth)acrylic acid; acrylamide; methacrylamide; N-isopropylacrylamide; methyl vinyl ketone; vinyl acetate; alkylene glycol such as ethylene glycol, propylene glycol, and tetramethylene ether glycol, and the like.

The polymerizable compound may be a compound having a cyclic ether group such as an epoxy group, an oxetane group, a tetrahydrofuran group, or a tetrahydropyran group on the side chain of (meth)acrylic acid such as glycidyl(meth)acrylate and (3-ethyloxetan-3-yl)methyl (meth)acrylate. This polymerizable compound can be used to form the polymer represented by the above-mentioned formula (1).

The content of the polymerizable compound in the slurry may be the same as the content of the polymer having lithium ion conductivity contained in the above-mentioned separation membrane 7.

The content of the third solvent in the slurry is 40% by mass or less based on the total amount of the slurry. Thereby, the content of the third solvent contained in the separation membrane 7 can be set within the above-mentioned range. The content of the third solvent may be 38% by mass or less, 35% by mass or less, 33% by mass or less, 30% by mass or less, 25% by mass or less, 20% by mass or less, 18% by mass or less, 15% by mass or less, 13 mass % or less, or 10 mass % or less based on the total amount of the slurry. The content of the third solvent may be 5% by mass or more, 8% by mass or more, 18% by mass or more, or 27% by mass or more based on the total amount of the slurry from the viewpoint of further increasing the ionic conductivity of the separation membrane 7.

When the separation membrane 7 contains the above-mentioned inorganic oxide particles, inorganic oxide particles may be added to the slurry. The content of the inorganic oxide particles in the slurry may be the same as the content of the inorganic oxide particles contained in the above-mentioned separation membrane 7.

A polymerization initiator may be added to the slurry. Thereby, the polymerizable compound can be favorably polymerized, and the separation membrane can be favorably produced from the slurry. The polymerization initiator may be a thermal polymerization initiator or a photopolymerization initiator, and can be appropriately selected depending on the purpose.

Examples of the thermal polymerization initiator include azobisisobutyronitrile and azobis(2-methylbutyronitrile).

Examples of the photopolymerization initiator include 2-hydroxy-2-methyl-1-phenylpropanone, diphenyl (2,4,6-trimethylbenzoyl) phosphine oxide and the like.

The content of the polymerization initiator may be 0.5% by mass or more, 1% by mass or more, 10% by mass or more, or 20% by mass or more, and 50% by mass or less, 40% by mass or less, 30% by mass or less, 10% by mass or less, 5% by mass or less, or 3% by mass or less, based on the total amount of the slurry.

In the step of obtaining the separation membrane, subsequently, the above-mentioned slurry is formed in the form of a membrane, and then the polymerizable compound is polymerized.

A method for forming the slurry in the form of a membrane is, for example, a method in which a frame of an arbitrary size is provided on one surface of a substrate such as a PET sheet, and the slurry is injected therein. Alternatively, the slurry may be formed in a film state by applying the slurry onto one surface of the substrate by a doctor blade method, a dipping method, a spray method, or the like.

A method of polymerizing the polymerizable compound is a method of applying heat under predetermined conditions when the slurry contains a thermal polymerization initiator. The heating temperature may be, for example, 80~90°C. The heating time may be appropriately adjusted in accordance with the heating temperature, and is, for example, 1 to 10 minutes.

A method for polymerizing a polymerizable compound is a method of irradiating light under predetermined conditions when the slurry contains a photopolymerization initiator. In one embodiment, the polymerizable compound may be polymerized by irradiation with light (ultraviolet light) having a wavelength within the range of 200-400 nm.

In the step of providing the separation membrane 7 between the positive electrode 6 and the negative electrode 8, the positive electrode 6, the separation membrane 7 and the negative electrode 8 are laminated, for example, by lamination. Thereby, the electrode group 2 including the positive electrode 6, the negative electrode 8, and the separation membrane 7 provided between the positive electrode 6 and the negative electrode 8 can be obtained. Further, the lithium ion secondary battery 1 can be obtained by housing the electrode group 2 in the battery outer packaging body 3.

EXAMPLE

Hereinafter, the present invention will be described in more detail with reference to examples, but the present invention is not limited to these examples.

[Example 1]

A polymerizable compound represented by the following formula (9) (where n = 14, product name: NK Ester A-600 available from Shin-Nakamura Chemical Co., Ltd.), lithium salt (LiTFSI), a solvent (diethylene glycol dimethyl ether(diglyme)), and a thermal polymerization initiator (azobisisobutyronitrile) were mixed to prepare a slurry. The composition of each material is shown in Table 1 below. A silicone rubber frame (4 cm × 4 cm, thickness: 1 mm) was mounted on a PET sheet (8 cm × 8 cm, thickness: 0.035 mm), and the prepared slurry was placed in the frame. Then, the polymerizable compound was polymerized by heating at 80°C for 3 minutes using a hot plate to obtain a separation membrane. The separation membrane was removed from the frame and used for the test shown below.

[Chemical Formula 7]

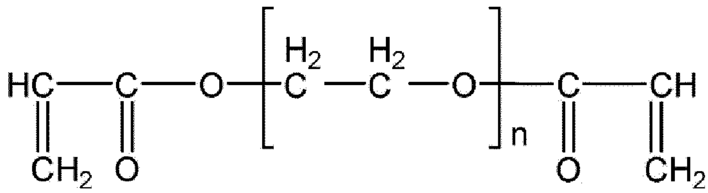

(9)

[Examples 2 to 3]

A separation membrane was manufactured in the same manner as in Example 1, except that the heating conditions of the slurry were changed as shown in Table 1 below.

[Example 4]

A separation membrane was manufactured in the same manner as in Example 1, except that the composition and heating conditions of the slurry were changed as shown in Table 1 below.

[Example 5]

A separation membrane was manufactured in the same manner as in Example 1, except that the inorganic oxide particles ($SiO_2$) were added to the slurry and the heating conditions of the slurry were changed as shown in Table 1 below.

[Example 6]

A polymerizable compound represented by the formula (9) (where n = 14, product name: NK Ester A-600 available from Shin-Nakamura Chemical Co., Ltd.), lithium salt (LiTFSI), a solvent (EMI-TFSI), and a thermal polymerization initiator (2-hydroxy-2-methyl-1-phenylpropanone) were mixed to prepare a slurry. The composition of each material is shown in Table 2 below. A silicone rubber frame (4 cm × 4 cm, thickness: 1 mm) was mounted on a PET sheet (8 cm × 8 cm, thickness: 0.035 mm), and the prepared slurry was placed in the frame. Then, the polymerizable compound was polymerized by ultraviolet light (wavelength: 365 nm) for 30 minutes to obtain a separation membrane. The separation membrane was removed from the frame and used for the test described shown below.

[Examples 7 to 8]

A separation membrane was manufactured in the same manner as in Example 6, except that the composition of the slurry was changed as shown in Table 2 below.

[Comparative Example 1]

A separation membrane was manufactured in the same manner as in Example 1, except that the composition of the slurry and the heating conditions of the slurry were changed as shown in Table 2 below.

[Comparative Example 2]

A separation membrane was manufactured in the same manner as in Example 1, except that the inorganic oxide particles ($SiO_2$) were added to the slurry.

<Solvent Content in Separation Membrane>

The separation membranes according to Examples or Comparative Examples were diluted about 10 times with methanol, and extracted for 15 minutes by ultrasonic irradiation to obtain an extract. 1.0 μL of this extract was injected into a gas chromatograph, so that the solvent content in the separation membrane according to Examples or Comparative Examples was measured. Specific conditions for gas chromatography mass spectrometry are as follows. The results are shown in Tables 1 and 2 below.

Device name: GC-4000 (manufactured by GL Science)
Carrier gas: Helium 5.0 mL/min
Column: TC-WAX polyethylene glycol (0.53 mm ID × 30 m, 1.0 μL)
Split ratio: 1/10
Injection temperature: 250°C
Detection temperature: 250°C
Oven temperature: heated from 60°C (1 minute) at 20°C/min →240°C
Detector: Hydrogen spark ionization detector (FID)
Range: $10^2$

<Evaluation of Solvent Separation capability>

A separation membrane according to Examples or Comparative Examples, and separator (UP3085 available from Ube Industries Ltd.) were overlapped, and sandwiched between two silicone rubber sheets (thickness: 0.5 mm), which were placed between H-type cells. Dimethyl carbonate (DMC) was put into the cell on the separation membrane side, and the appearance of the separation membrane was visually observed after a predetermined number of days had passed. If the separator membrane is excellent in solvent separation capability, DMC hardly penetrates the separation membrane, which makes it difficult for DMC to penetrate the separation membrane. However, if the separation membrane is inferior in solvent separation capability, DMC permeates the separation membrane and permeates into the separator. Therefore, by observing the appearance of the separator and confirming whether or not DMC has permeated the separator, it is possible to evaluate the separation capability of the solvent (solvents corresponding to the first solvent and the second solvent) of the separation membrane. If DMC does not penetrate the separator even after one day from the start of the test, it is indicated by " ≥ 1 day" in Tables 1 and 2 below. In this case, it can be said that the solvent separation capability of the separation membrane is excellent.

<Evaluation of Ionic Conductivity>

Test cells were fabricated using the separation membranes of Examples and Comparative Examples, thereby evaluating the ionic conductivity of the separation membranes. First, an upper lid (CR2032 cap available from Hohsen Corp.), a 1.6mm thick plate spring, a 1.0mm thick SUS spacer (2 sheets), a separator, a gasket, a lower lid (CR2032 case available from Hohsen Corp.) were laminated in the stated order, the upper lid and the lower lid were caulked to fabricate a test cell, and the bulk resistance of the separation membrane was measured. The measurement device and measurement conditions were as follows.

Measuring device: VSP electrochemical measuring system (available from BioLogic)
Measurement temperature: 25°C
AC Amplitude: 10mV
Frequency range: 10 mHz to 1 MHz
After the measurement, the ionic conductivity of the separation membrane was calculated according to the following formula (α).

The result is shown in Table 1~ Table 2 below.

$$\sigma = L/RA \dots (\alpha)$$

$\sigma$ (S/cm): ionic conductivity
L (cm): thickness of the separation membrane
R($\Omega$): bulk resistance
A ($cm^2$): Cross-sectional area of SUS spacer

[Table 1]

| | | Example 1 | Example 2 | Example 3 | Example 4 | Example 5 |
|---|---|---|---|---|---|---|
| Slurry compositio n (Amount added · g) | polymerizabl e compound | A-600 (6g) | | | | |
| | lithium salt | LiTFSI (0.6g) | | | LiTFSI (0.9g) | LiTFSI (0.6g) |
| | solvent | diglyme (3g) | | | diglyme (4.5g) | diglyme (3g) |
| | polymerizatio n initiator | azobisisobutyronitrile (0.15g) | | | | |
| | inorganic oxide particles | - | - | - | - | $SiO_2$ (0.5g) |
| Heating conditions (temperature/time) | | 80°C/3mi n | 80°C/ 4.5mi n | 80°C/ 1.5mi n | 70°C/1mi n | 80°C/ 1.5mi n |
| Solvent content in slurry | | 31 mass% | | | 39 mass% | 29 mass% |
| Solvent content in separation membrane | | 11 mass% | 8 mass% | 17 mass% | 35 mass% | 17 mass% |
| Evaluatio n | solvent separation capability (number of elapsed days) | ≥1 day | | | | |
| | ionic conductivity (s/cm) | $1.3x10^{-4}$ | $6.0x10^{-5}$ | $1.5x10^{-4}$ | $1.7x10^{-4}$ | $1.8x10^{-4}$ |

[Table 2]

| | | Example 6 | Example 7 | Example 8 | Comparative Example 1 | Comparative Example 2 |
|---|---|---|---|---|---|---|
| Slurry composition (Amount added · g) | polymerizable compound | A-600 (6g) | | | | |
| | lithium salt | LiTFSI (0.3g) | LiTFSI (0.15g) | LiTFSI (0.6g) | LiTFSI (2.4g) | |
| | solvent | EMI-TFSI (15g) | EMI-TFSI (0.75g) | EMI-TFSI (3g) | EMI-TFSI (12g) | |
| | polymerization initiator | 2-hydroxy-2-methyl-1-phenylpropane (0.15g) | | | azobisisobutyronitrile (0.15g) | |
| | inorganic oxide particles | - | - | - | - | $SiO_2$ (0.15g) |
| Heating conditions (temperature/time) | | - | - | - | - | 80°C/5min |
| Solvent content in slurry | | 19 mass% | 11 mass% | 31 mass% | 58 mass% | 57 mass% |
| Solvent content in separation membrane | | 19 mass% | 11 mass% | 31 mass% | Impossible to form a membrane | |
| Evaluation | solvent separation capability (number of elapsed days) | ≥1 day | | | unmeasurable | |
| | ionic conductivity (s/cm) | $1.6x10^{-5}$ | $8.4x10^{-6}$ | $6.6x10^{-5}$ | unmeasurable | |

As shown in Tables 1 and 2, the separation membranes according to Examples had excellent solvent separation capability. On the other hand, since the separation membranes according to Comparative Examples could not be formed in the form of a membrane, it was impossible to evaluate the performance of the separation membrane.

[Description of Reference Numerals]

| | | | |
|---|---|---|---|
| 1 | lithium ion secondary battery | 2 | electrode group |
| 3 | battery outer packaging body collector tab | 4 | positive electrode current |
| 5 | negative current collector tab | 6 | positive electrode |
| 7 | separation membrane | 8 | negative electrode |
| 9 | positive current collector | 10 | positive electrode mixture layer |
| 11 | negative current collector | 12 | negative electrode mixture layer |

## Claims

**1.** A lithium ion secondary battery comprising a positive electrode mixture layer, a separation membrane, and a negative electrode mixture layer in the stated order, wherein:

the positive electrode mixture layer contains a positive electrode active material, a first lithium salt, and a first solvent;
the negative electrode mixture layer contains a negative electrode active material, a second lithium salt, and a second solvent different from the first solvent;
the separation membrane contains a polymer having lithium ion conductivity, a third lithium salt, and a third solvent; and
the content of the third solvent is 40% by mass or less based on the total amount of the separation membrane.

**2.** The lithium ion secondary battery according to claim 1, wherein:
the content of the third solvent is 35% by mass or less based on the total amount of the separation membrane.

**3.** The lithium ion secondary battery according to claim 1 or 2, wherein:
the third solvent is an ionic liquid.

**4.** The lithium ion secondary battery according to any one of claims 1 to 3, wherein:
the separation membrane further contains inorganic oxide particles.

**5.** A separation membrane for being disposed between a positive electrode mixture layer and a negative electrode mixture layer, in a lithium ion secondary battery comprising a positive electrode mixture layer that contains a positive electrode active material, a first lithium salt, and a first solvent, and a negative electrode mixture layer that contains a negative electrode active material, a second lithium salt, and a second solvent different from the first solvent,
wherein the separation membrane contains a polymer having lithium ion conductivity, a third lithium salt, and a third solvent, and the content of the third solvent is 40% by mass or less based on the total amount of the separation membrane.

**6.** The separation membrane according to claim 5, wherein:
the content of the third solvent is 35% by mass or less based on the total amount of the separation membrane.

**7.** The separation membrane according to claim 5 or 6, wherein:
the third solvent is an ionic liquid.

**8.** The separation membrane according to any one of claims 5 to 7, further comprising inorganic oxide particles.

**9.** A method for manufacturing a lithium ion secondary battery, the method comprising the steps of:

obtaining a positive electrode comprising a positive electrode mixture layer that contains a positive electrode active material, a first lithium salt, and a first solvent;
obtaining a negative electrode comprising a negative electrode mixture layer that contains a negative electrode active material, a second lithium salt, and a second solvent different from the first solvent;
forming a slurry containing a polymerizable compound capable of forming a polymer having lithium ion conductivity, a third lithium salt, and a third solvent in the form of a membrane and then polymerizing the polymerizable compound to obtain a separation membrane; and
providing the separation membrane between the positive electrode and the negative electrode,
wherein the content of the third solvent is 40% by mass or less based on the total amount of the slurry.

**10.** The manufacturing method according to claim 9, wherein:
the content of the third solvent is 35% by mass or less based on the total amount of the slurry.

**11.** The manufacturing method according to claim 9 or 10, wherein:
the third solvent is an ionic liquid.

**12.** The manufacturing method according to any one of claims 9 to 11, wherein:
the slurry further contains inorganic oxide particles.

**13.** A method for manufacturing a separation membrane for being disposed between a positive electrode mixture layer and a negative electrode mixture layer, in a lithium ion secondary battery comprising a positive electrode mixture layer that contains a positive electrode active material, a first lithium salt, and a first solvent, and a negative electrode mixture layer that contains a negative electrode active material, a second lithium salt, and a second solvent different from the first solvent, the method comprising:

forming a slurry containing a polymerizable compound capable of forming a polymer having lithium ion conductivity, a third lithium salt, and a third solvent in the form of a membrane and then polymerizing the polymerizable compound to obtain a separation membrane,
wherein the content of the third solvent is 40% by mass or less based on the total amount of the slurry.

**14.** The manufacturing method according to claim 13, wherein:

the content of the third solvent is 35% by mass or less based on the total amount of the slurry.

**15.** The manufacturing method according to claim 13 or 14, wherein:
the third solvent is an ionic liquid.

**16.** The manufacturing method according to any one of claims 13 to 15, wherein:
the slurry further contains inorganic oxide particles.

【FIG. 1】

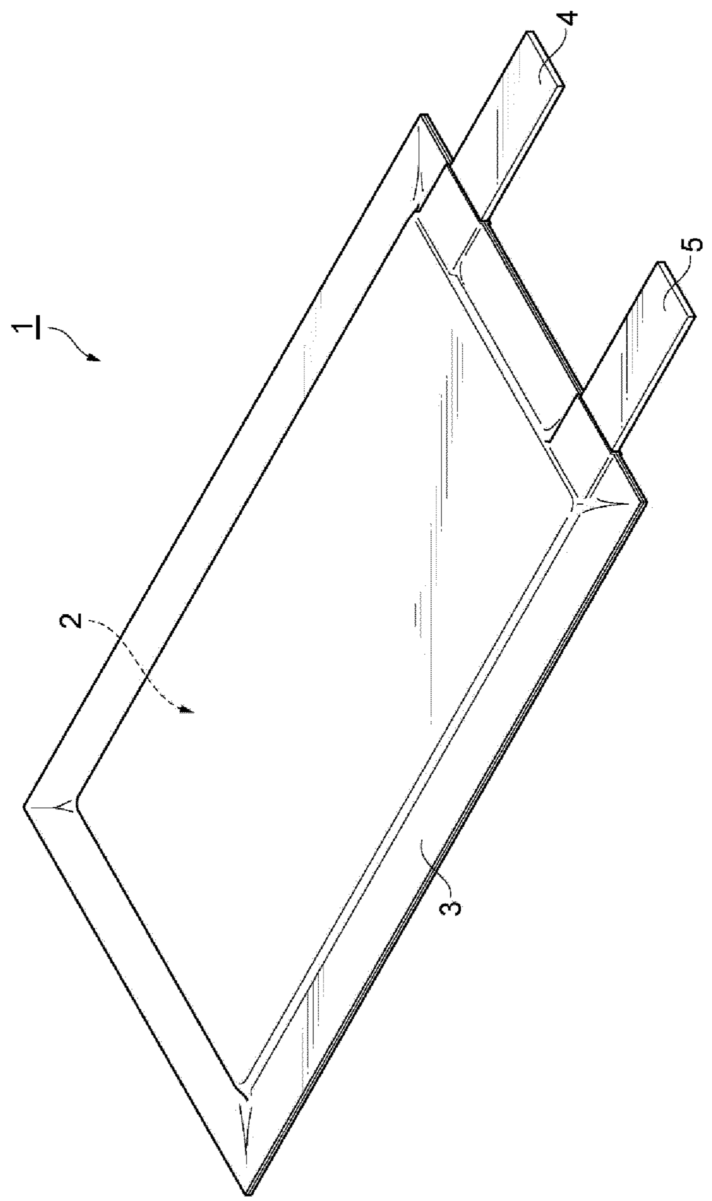

【FIG. 2】

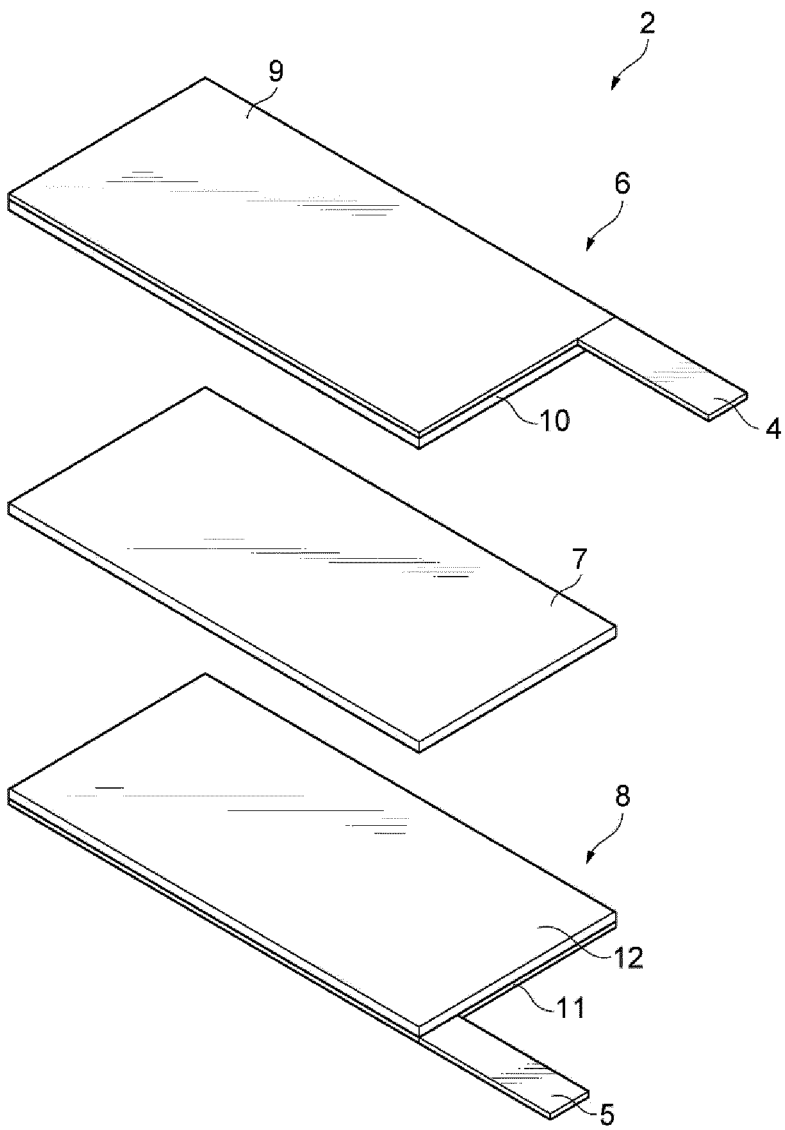

## INTERNATIONAL SEARCH REPORT

International application No.
PCT/JP2020/032620

A. CLASSIFICATION OF SUBJECT MATTER
Int.Cl. H01M10/052(2010.01)i, H01M10/0565(2010.01)i, H01M50/409(2021.01)i
FI: H01M10/052, H01M10/0565, H01M2/16P

According to International Patent Classification (IPC) or to both national classification and IPC

B. FIELDS SEARCHED

Minimum documentation searched (classification system followed by classification symbols)
Int.Cl. H01M10/052, H01M10/0565, H01M2/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/064842 A1 (GS YUASA INTERNATIONAL LTD.) 20 April 2017 (2017-04-20), paragraphs [0033]-[0039], [0060]-[0069], [0122]-[0129] | 1-16 |
| A | JP 2001-110447 A (SHARP CORPORATION) 20 April 2001 (2001-04-20), entire text | 1-16 |

☐ Further documents are listed in the continuation of Box C.   ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 October 2020 | 02 November 2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/032620

| | | |
|---|---|---|
| WO 2017/064842 A1 | 20 April 2017 | US 2018/0287120 A1<br>paragraphs [0047]-[0053], [0077]-[0089], [0158]-[0167]<br>EP 3364486 A1<br>CN 108140875 A |
| JP 2001-110447 A | 20 April 2001 | US 6534214 B1<br>whole document |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001110447 A